# EUROPÄISCHE PATENTSCHRIFT

(11) **EP 1 818 563 B1**
(45) Veröffentlichungstag und Bekanntmachung des Hinweises auf die Patenterteilung: **13.03.2013**
(21) Anmeldenummer: 07001574.8
(22) Anmeldetag: 25.01.2007
(51) Int. Cl.: F16F 9/02

(54) **Arretierbares Kolben-Zylinder-Aggregat**
Lockable piston-cylinder assembly
Agrégat de cylindre-piston pouvant être bloqué

(30) Priorität: 10.02.2006 DE 102006006091
(43) Veröffentlichungstag der Anmeldung: 15.08.2007
(73) Patentinhaber: Stabilus GmbH, 56070 Koblenz (DE); MITSUBISHI MOTORS CORPORATION, Tokyo 108-8410 (JP)
(72) Erfinder: Born, Frank, 56379 Dienethal (DE); Mintgen, Rolf, 56743 Thuer (DE); Rennecke, Dirk, 56626 Andernach (DE); Rosenstein, Bernd, 56579 Bonefeld (DE); Ushida, Yukio, Toyoake Aichi-ken (JP); Kaneko, Masaru, Tokai Aichi-ken (JP); Aoyama, Hiroshi, Aichi-ken (JP)
(74) Vertreter: Klein, Thomas

(56) Entgegenhaltungen:
- EP-A- 1 760 353
- JP-U- 1 128 039
- US-A1- 2001 002 739

## Beschreibung

Die Erfindung bezieht sich auf ein arretierbares Kolben-Zylinder-Aggregat, insbesondere Gasfeder oder ein Dämpfer mit einer Zylinderanordnung, die einen geschlossenen Zylinder aufweist, in dem ein den mit einem Druckgas gefüllten Zylinderinnenraum in eine erste und eine zweite Kammer unterteilender Kolben verschiebbar geführt ist, der einseitig eine Kolbenstange aufweist, die abgedichtet an der einen Stirnseite des Zylinders aus dem Zylinderinnenraum nach außen geführt ist, wobei die erste und zweite Kammer miteinander verbunden oder verbindbar ist, mit einem die Zylinderanordnung umschließenden Feststellrohr, das mit seinem ersten Endbereich im Bereich des freien Endes der Kolbenstange zwischen einer zur Kolbenstange koaxialen Freigabestellung und einer zur Längserstreckung der Kolbenstange geneigten Arretierstellung schwenkbar gelagert ist und an seinem zweiten Endbereich einen Abstützanschlag aufweist, wobei das Feststellrohr bei ausgefahrener Kolbenstange in die Arretierstellung schwenkbar und mit dem Abstützanschlag axial an der einen Stirnseite des Zylinders anlegbar, das Feststellrohr mittels einer betätigbaren Halteeinrichtung in seiner Arretierstellung haltbar und das in seiner Arretierstellung befindliche Feststellrohr mittels einer Rastvorrichtung mit einem Teil der Zylinderanordnung verbindbar ist.

Bei einer derartigen Gasfeder, die z.B. zum Öffnen von Klappen oder Türen insbesondere an Kraftfahrzeugen dient, ist es bekannt, daß das Feststellrohr durch eine Feder permanent in seine geneigte Arretierstellung kraftbeaufschlagt ist. Beim Ausfahren der Kolbenstange gleitet dadurch das Feststellrohr mit seinem dem freien Ende der Kolbenstange entgegengesetzten Endbereich einseitig an dem Zylinder entlang, bis es nach Überfahren des Zylinderendes in eine stärker geneigte Stellung verschwenkt. In dieser stärker geneigten Stellung liegt ein Teil der Mündung des Feststellrohres der ihr zugewandten Stirnseite des Zylinders gegenüber und bildet einen Anschlag, an dem bei einem Wiedereinfahren der Kolbenstange das ihm gegenüberliegende Ende des Feststellrohres zur Anlage kommt und ein weiteres Einfahren der Kolbenstange verhindert.

Erst nach einem manuellen Koaxialschwenken des Feststellrohres kann die Kolbenstange wieder in den Zylinder einfahren.

Diese Gasfeder hat den Nachteil, daß es bei jedem Ausfahren der Kolbenstange über eine bestimmte Ausfahrlänge hinaus zwangsweise immer zu einer Arretierung kommt, die dann manuell gelöst werden muß.

Aus der EP-A-1 760 353 ist ein arretierbares Kolben-Zylinder-Aggregat der eingangs genannten Art bekannt. Dabei weist das Feststellrohr an seinem inneren Umfang ein Paar nach Innen hervorstehende Vorsprünge auf. Weiterhin ist eine Öffnung im Feststellrohr vorgesehen, die eine elastische Deformation des Feststellrohres ermöglicht.

Aufgabe der Erfindung ist es ein Kolben-Zylinder-Aggregat der eingangs genannten Art zu schaffen, das bei einfachem Aufbau nur bedarfsweise arretierbar und dearretierbar ist sowie einfach und leicht betätigbar ist.

Diese Aufgabe wird erfindungsgemäß dadurch gelöst, daß das Feststellrohr eine oder mehrere Rastfedern aufweist, die bei einem Schwenken des Feststellrohres zwischen der Arretierstellung und der Freigabestellung von einem Teil der Zylinderanordnung entgegen ihrer Federkraft auslenkbar und in der Arretierstellung dieses Teil hintergreifend einrastbar sind, wobei das Teil der Zylinderanordnung, durch das die Rastfeder oder die Rastfedern entgegen ihrer Federkraft auslenkbar und in der Arretierstellung dieses Teil hintergreifend einrastbar sind, die Kolbenstange oder der Zylinder ist und die Rastfedern von einer an dem Feststellrohr angeordneten Klaue gebildet sind, die eine Durchgangsöffnung gleichen oder größeren Durchmessers als dem Durchmesser der Kolbenstange oder des Zylinders aufweist, von der eine zur Kolbenstange oder zum Zylinder gerichtete Klauenöffnung geringerer Breite als dem Durchmesser der Kolbenstange oder des Zylinders quer zur Erstreckung der Kolbenstange radial nach außen mündet und die Klauenarme radial federnd ausgebildet sind sowie die Klaue an ihrem der Klauenöffnung diametral gegenüberliegenden Bereich einen Betätigungsbereich besitzt, der radial zur Durchgangsöffnung hin die Klauenarme spreizend kraftbeaufschlagbar ist, die versteifte Übergangsbereiche zu dem Betätigungsbereich aufweisen oder daß die Zylinderanordnung eine oder mehrere Rastfedern aufweist, die bei einem Schwenken des Feststellrohres zwischen der Arretierstellung und der Freigabestellung von einem Teil des Feststellrohres entgegen ihrer Federkraft auslenkbar und in der Arretierstellung dieses Teil hintergreifend einrastbar sind.

Da nur bei insbesondere manueller Betätigung der Halteeinrichtung eine Arretierung oder Dearretierung erfolgt, wird ein unkomfortables automatisches Blockieren des ausgefahrenen Kolben-Zylinder-Aggregats vermieden. Nur dann, wenn wirklich eine Arretierung im ausgefahrenen Zustand gewollt ist, wird diese bewußt hergestellt und genauso bewußt auch wieder aufgehoben, wenn dies gewollt ist.

Die erfindungsgemäße Lösung benötigt keine zusätzlichen Bauteile wobei neben dem einfachen Aufbau eine gleichmäßige Belastung der Bauteile der Klaue und ein integraler Aufbau zum zusätzlichen Öffnen der Klaue erreicht wird.

Ein nur geringer Montageaufwand ist erforderlich, wenn das Feststellrohr als ein Spritzgußteil aus Kunststoff und einteilig mit den Rastfedern ausgebildet ist.

Zur einfachen Montage des Feststellrohres an die Kolbenstange kann das Feststellrohr an seinem ersten Endbereich mittels einer Rasteinrichtung mit dem freien Ende der Kolbenstange verbunden sein.

Eine einfache schwenkbare Verbindung des Feststellrohres mit der Kolbenstange wird dadurch erreicht, daß das Feststellrohr an seinem ersten Endbereich eine axiale

Durchgangsöffnung besitzt, durch die das freie Ende der Kolbenstange mit Spiel hindurchgeführt und mit dem Feststellrohr verbunden ist.

Dabei kann das aus dem Feststellrohr herausragende freie Ende der Kolbenstange einen Anschlag besitzen, der axial an dem Mündungsbereich der Durchgangsöffnung des Feststellrohres abgestützt ist.

Eine einfach montierbare und das Feststellrohr zur Kolbenstange richtig positionierende Ausbildung wird dadurch erreicht, daß die Rasteinrichtung einen sich axial zur Kolbenstange von dem zweiten Ende des Feststellrohres weggerichteten Rastarm aufweist, an dessen freiem Endbereich ein Rasthaken angeordnet ist, durch den ein Rastansatz am freien Ende der Kolbenstange derart hintergreifbar ist, daß der Anschlag am freien Ende der Kolbenstange in Anlage an dem Mündungsbereich des Feststellrohres gehalten ist.

Ein Ausführungsbeispiel der Erfindung ist in der Zeichnung dargestellt und wird im folgenden näher beschrieben. Es zeigen
- Figur 1: einen Teilschnitt einer Seitenansicht eines Kolben-Zylinder-Aggregats in eingefahrener Stellung
- Figur 2: das Kolben-Zylinder-Aggregat nach Figur 1 in ausgefahrener, nichtarretierter Stellung
- Figur 3: das Kolben-Zylinder-Aggregat nach Figur 1 in ausgefahrener arretierter Stellung

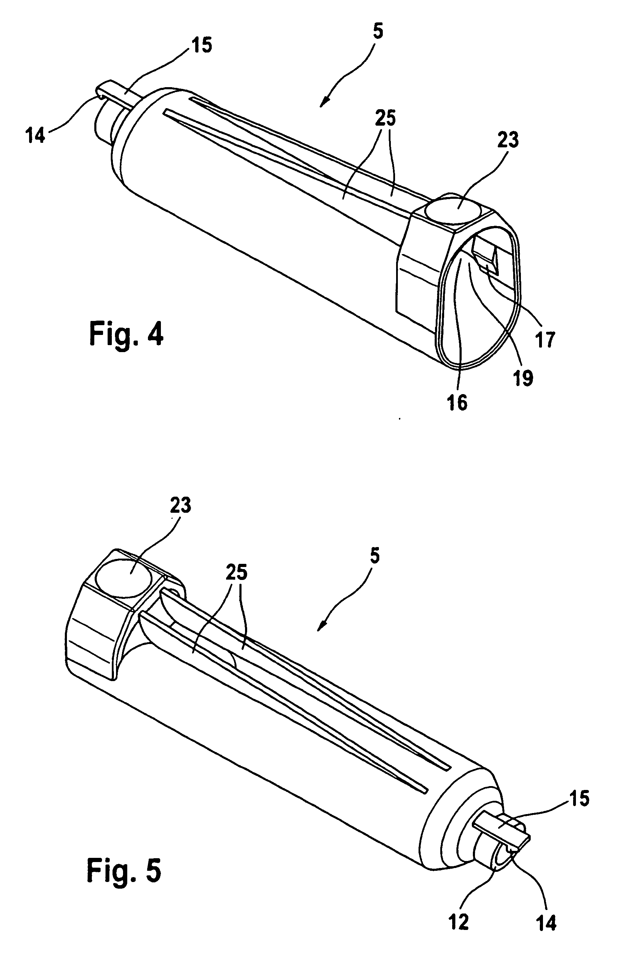

- Figur 4: eine erste perspektivische Ansicht des Feststellrohres des Kolben-Zylinder-Aggregats Gasfeder nach Figur 1
- Figur 5: eine zweite perspektivische Ansicht des Feststellrohres des Kolben-Zylinder-Aggregats nach Figur 1

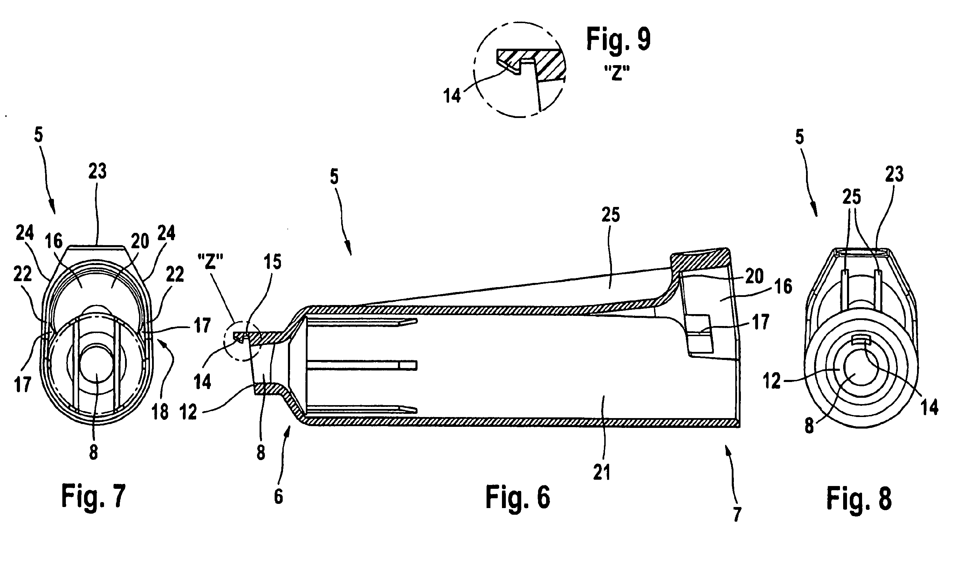

- Figur 6: eine Schnittansicht des Feststellrohres nach Figur 4
- Figur 7: eine befestigungsseitige Stirnansicht des Feststellrohres nach Figur 4
- Figur 8: eine arretierseitige Stirnansicht des Feststellrohres nach Figur 4
- Figur 9: eine vergrößerte Darstellung des Ausschnitts "Z" aus Figur 6.

Das dargestellte, als arretierbare Gasfeder ausgebildete Kolben-Zylinder-Aggregat besitzt eine Zylinderanordnung 1 mit einem geschlossenen Zylinder 2, in dem ein nicht dargestellter Kolben verschiebbar geführt ist, der den mit einem Druckgas gefüllten Zylinderinnenraum in eine erste und eine zweite Kammer unterteilt.

Einseitig ist an dem Kolben eine Kolbenstange 3 angeordnet, die abgedichtet an der einen Stirnseite 4 des Zylinders 2 aus dem Zylinderinnenraum nach außen geführt ist. Die beiden Kammern des Zylinderinnenraums sind durch eine ebenfalls nicht dargestellte Drosselverbindung miteinander verbunden.

An dem freien Ende der Kolbenstange 3 ist ein die Zylinderanordnung 1 umschließendes Feststellrohr 5 mit seinem ersten Endbereich 6 schwenkbar angeordnet, das sich mit seinem zweiten Endbereich 7 zum Zylinder 2 hin erstreckt.

Dabei weist das Feststellrohr 5 in seinem ersten Endbereich 6 eine axiale Durchgangsöffnung 8 auf, durch die das freie Ende der Kolbenstange 3 derart mit Spiel hindurchgeführt ist, daß die Kolbenstange 3 relativ zum Feststellrohr 5 schwenkbar ist. Dazu ist der Innendurchmesser des Feststellrohres 5 ausgehend von der Durchgangsöffnung 8 zum zweiten Endbereich 7 des Feststellrohres 5 hin gegenüber der Durchgangsöffnung 8 wesentlich vergrößert ausgebildet.

Auf das mit einem Gewinde 9 versehene freie Ende der Kolbenstange 3 ist ein Befestigungsteil 10 aufgeschraubt, dessen dem Feststellrohr 5 zugewandte Stirnseite einen Anschlag 11 bildet, der axial an dem Mündungsbereich 12 der Durchgangsöffnung 8 abgestützt ist.

Das Befestigungsteil 10 besitzt einen radial hervorstehenden Rastansatz 13, der von einem Rasthaken 14 derart hintergriffen ist, daß der Anschlag 11 des Befestigungsteils 10 in Anlage an dem Mündungsbereich 12 des Feststellrohres 5 gehalten wird. Der Rasthaken 14 ist an dem freien Ende eines Rastarmes 15 angeordnet, der sich etwa axial zur Längserstreckung des Feststellrohres 5 in Richtung zu dessen zweitem Endbereich 7 hin erstreckt und einteilig mit dem Feststellrohr 5 ausgebildet ist.

Der Rasthaken 14 hintergreift den Rastansatz 13 mit einer zur Längsachse der Kolbenstange 3 gerichteten Vorspannung.

An dem zweiten Endbereich 7 ist der Innenbereich 21 des Feststellrohres 5 mit einer stadionartigen Erweiterung 16 ausgebildet, wobei die Breite der Erweiterung 16 um ein geringes Maß größer ist als der Außendurchmesser des Zylinders 2 im Bereich seiner Stirnseite 3.

lm mittleren Bereich der Längserstreckung der Erweiterung 16 sind einander gegenüberliegend zwei doppelrampenartige Rastfedern 17 einteilig mit dem Feststellrohr 5 ausgebildet, die eine Klaue 18 bilden, deren Klauenöffnung 19 geringere Breite als der Außendurchmesser des Zylinders 2 besitzt.

Die Rastfedern 17 sind federnd nach außen auslenkbar, so daß bei ausgefahrener Kolbenstange 3 das Feststellrohr 5 derart manuell in eine oder aus einer zur Längserstreckung der Kolbenstange 3 geneigten Stellung schwenkbar ist und dabei die Rastfedern 17 von dem der Stirnseite 4 nahen Endbereich des Zylinders 2 überrastbar sind.

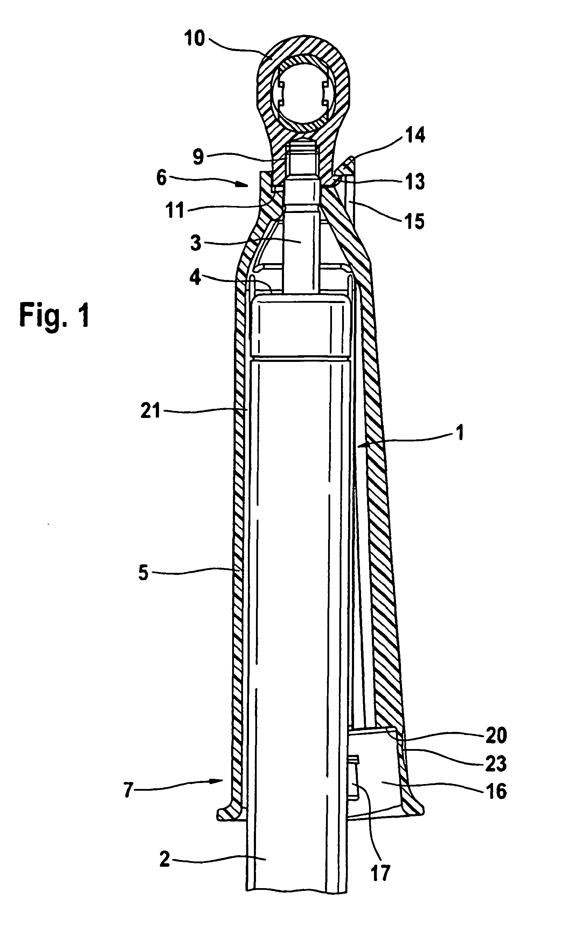

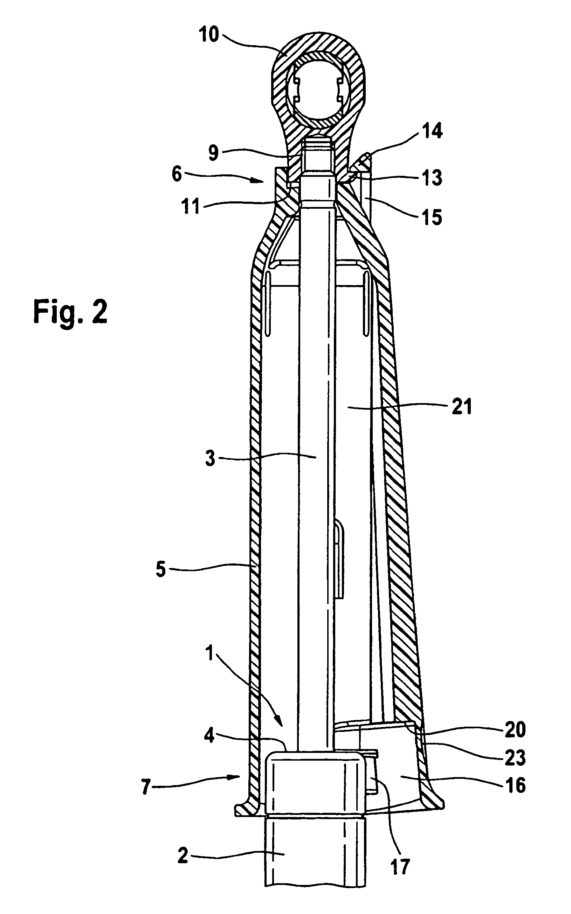

Sind Kolbenstange 3 und Feststellrohr 5 etwa koaxial zueinander ausgerichtet (Figuren 1 und 2), befindet sich die Gasfeder in ihrer Freigabestellung, sodaß die Kolbenstange 3 ungehindert Aus- und Einfahren kann.

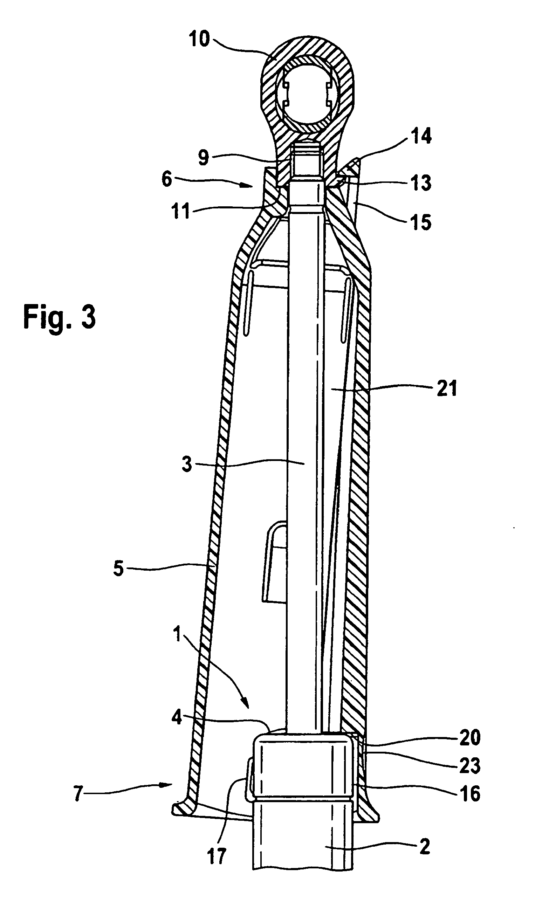

Wird das Feststellrohr 5 bei ausgefahrener Kolbenstange 3 manuell aus ihrer Freigabestellung heraus die Rastfedern 17 überfahrend in eine Lage verschwenkt, in der das Feststellrohr 5 zur Kolbenstange 3 geneigt ist, befindet sich die Gasfeder in ihrer Arretierstellung (Figur 3).

Dabei gelangt die Stirnseite 4 des Zylinders 2 in axiale Anlage an einem Abstützanschlag 20 des Feststellrohres 5, der durch den radialen Übergang der Erweiterung 16 in den normalen Innenbereich 21 des Feststellrohres 5 gebildet ist.

Dadurch ist die Kolbenstange 3 an einer Einfahrbewegung in den Zylinder 2 gehindert.

Zu dem der Klauenöffnung 19 diametral gegenüberliegenden Bereich der Klaue 18 führen Klauenarme 22, die durch einen Betätigungsbereich 23 miteinander verbunden sind.

Die Übergangsbereiche 24 von den Klauenarmen 22 zu dem Betätigungsbereich 23 sind durch Längsstege 25 des Feststellrohres 5 versteift, so daß bei einer radial nach innen gerichteten manuellen Druckbeaufschlagung des Betätigungsbereiches 23 die Klauenarme 22 voneinander weggeschwenkt werden, wobei sich auch die Rastfedern 17 radial voneinander wegbewegen.

Damit kann das Feststellrohr 5 problemlos wieder in seine Freigabestellung verschwenkt werden und die Kolbenstange 3 ungehindert in den Zylinder 2 einfahren.
Ein Verschwenken aus der Freigabestellung in die Arretierstellung und umgekehrt ist immer nur bewußt manuell möglich.

### Bezugszeichenliste

- 1: Zylinderanordnung
- 2: Zylinder
- 3: Kolbenstange
- 4: Stirnseite
- 5: Feststellrohr
- 6: erster Endbereich
- 7: zweiter Endbereich
- 8: Durchgangsöffnung
- 9: Gewinde
- 10: Befestigungsteil
- 11: Anschlag
- 12: Mündungsbereich
- 13: Rastansatz
- 14: Rasthaken
- 15: Rastarm
- 16: Erweiterung
- 17: Rastfedern
- 18: Klaue
- 19: Klauenöffnung
- 20: Abstützanschlag
- 21: Innenbereich
- 22: Klauenarme
- 23: Betätigungsbereich
- 24: Übergangsbereiche
- 25: Längsstege

## Patentansprüche

1. Arretierbares Kolben-Zylinder-Aggregat, insbesondere Gasfeder oder ein Dämpfer mit einer Zylinderanordnung, die einen geschlossenen Zylinder aufweist, in dem ein den mit einem Druckgas gefüllten Zylinderinnenraum in eine erste und eine zweite Kammer unterteilender Kolben verschiebbar geführt ist, der einseitig eine Kolbenstange aufweist, die abgedichtet an der einen Stirnseite des Zylinders aus dem Zylinderinnenraum nach außen geführt ist, wobei die erste und zweite Kammer miteinander verbunden oder verbindbar ist, mit einem die Zylinderanordnung umschließenden Feststellrohr, das mit seinem ersten Endbereich im Bereich des freien Endes der Kolbenstange zwischen einer zur Kolbenstange koaxialen Freigabestellung und einer zur Längserstreckung der Kolbenstange geneigten Arretierstellung schwenkbar gelagert ist und an seinem zweiten Endbereich einen Abstützanschlag aufweist, wobei das Feststellrohr bei ausgefahrener Kolbenstange In die Arreterstellung schwenkbar und mit dem Abstützanschlag axial an der einen Stirnseite des Zylinders anlegbar, das Feststellrohr mittels einer betätigbaren Halteeinrichtung in seiner Arretierstellung haltbar und das in seiner Arretierstellung befindliche Feststellrohr mittels einer Rastvorrichtung mit einem Teil der Zylinderanordnung verbindbar ist, **dadurch gekennzeichnet, daß** das Feststellrohr (5) eine oder mehrere Rastfedern (17) aufweist, die bei einem Schwenken des Feststellrohres (5) zwischen der Arretierstellung und der Freigabestellung von einem Teil der Zylinderanordnung (1) entgegen ihrer Federkraft auslenkbar und in der Arretierstellung dieses Teil hintergreifend einrastbar sind, wobei das Teil der Zylinderanordnung (1), durch das die Rastfeder oder die Rastfedern (17) entgegen ihrer Federkraft auslenkbar und in der Arretierstellung dieses Teil hintergreifend einrastbar sind, die Kolbenstange oder der Zylinder (2) ist und die Rastfedern (17) von einer an dem Feststellrohr (5) angeordneten Klaue (18) gebildet sind, die eine Durchgangsöffnung gleichen oder größeren Durchmessers als dem Durchmesser der Kolbenstange oder des Zylinders (2) aufweist, von der eine zur Kolbenstange oder zum Zylinder (2) gerichtete Klauenöffnung (19) geringerer Breite als dem Durchmesser der Kolbenstange oder des Zylinders (2) quer zur Erstreckung der Kolbenstange (3) radial nach außen mündet und die Klauenarme (22) radial federnd ausgebildet sind sowie die Klaue (18) an ihrem der Klauenöffnung (19) diametral gegenüberliegenden Bereich einen Betätigungsbereich (23) besitzt, der radial zur Durchgangsöffnung hin die Klauenarme (22) spreizend kraftbeaufschlagbar ist, die versteifte Übergangsbereiche (24) zu dem Betätigungsbereich (23) aufweisen oder daß die Zylinderanordnung eine oder mehrere Rastfedern aufweist, die bei einem Schwenken des Feststellrohres zwischen der Arretierstellung und der Freigabestellung von einem Teil des Feststellrohres entgegen ihrer Federkraft auslenkbar und in der Arretierstellung dieses Teil hintergreifend einrastbar sind.

2. Kolben-Zylinder-Aggregat nach Anspruch 1, **dadurch gekennzeichnet, daß** das Feststellrohr (5) als ein Spritzgußteil aus Kunststoff und einteilig mit den Rastfedern (17) ausgebildet ist.

3. Kolben-Zylinder-Aggregat nach einem der vorhergehenden Ansprüche, dad u rch gekennzeichnet, daß das Feststellrohr (5) an seinem ersten Endbereich (6) mittels einer Rasteinrichtung mit dem freien Ende der Kolbenstange (3) verbunden ist.

4. Kolben-Zylinder-Aggregat nach Anspruch 3**, dadurch gekennzeichnet, daß** das Feststellrohr (5) an seinem ersten Endbereich (6) eine axiale Durchgangsöffnung (8) besitzt, durch die das freie Ende der Kolbenstange (3) mit Spiel hindurchgeführt und mit dem Feststellrohr (5) verbunden ist.

5. Kolben-Zylinder-Aggregatnach Anspruch 4, **dadurch gekennzeichnet, daß** das aus dem Feststellrohr (5) herausragende freie Ende der Kolbenstange (3) einen Anschlag (11) besitzt, der axial an dem Mündungsbereich (12) der Durchgangsöffnung (8) des Feststellrohres (5) abgestützt ist.

6. Kolben-Zylinder-Aggregat nach einem der Ansprüche 3 bis 5, **dadurch gekennzeichnet, daß** die Rasteinrichtung einen sich axial zur Kolbenstange (3) von dem zweiten Endbereich (7) des Feststellrohres (5) weggerichteten Rastarm (15) aufweist, an dessen freiem Ende ein Rasthaken (14) angeordnet ist, durch den ein Rastansatz (13) am freien Ende der Kolbenstange (3) derart hintergreifbar ist, daß der Anschlag (11) am freien Ende der Kolbenstange (3) in Anlage an dem Mündungsbereich (12) des Feststellrohres (5) gehalten ist.

## Claims

1. Lockable piston-cylinder assembly, in particular a gas-pressure spring or a damper with a cylinder arrangement exhibiting a closed cylinder in which a piston dividing the cylinder interior filled with a pressure gas into a first and a second chamber is guided movably, said piston exhibiting at one end a piston rod leading out of the cylinder interior to the outside and sealed at the one face end of the cylinder, the first and second chambers being connected or connectable to one another, with a locking tube surrounding the cylinder arrangement whose first end section is pivotably mounted in the area of the free end of the piston rod between a release position coaxial to the piston rod and a locking position inclined towards the longitudinal continuation of the piston rod and which at its second end section exhibits a supporting stop, wherein the locking tube can be pivoted into the locking position when the piston rod is extended and can be positioned axially against the one face end of the cylinder with the supporting stop, the locking tube can be held in its locking position by an actuatable retaining device and the locking tube can be connected to part of the cylinder arrangement when in its locking position by means of a latching device, **characterized in that** the locking tube (5) exhibits one or more latching springs (17) that during swivelling of the locking tube (5) between the locking position and the release position can be deflected against their spring force by a part of the cylinder arrangement (1) and can engage behind this part in the locking position, wherein the part of the cylinder arrangement (1) by which the latching spring or the latching springs (17) can be deflected against their spring force and can engage behind this part in the locking position is the piston rod or the cylinder(2), and the latching springs (17) are formed by a claw (18) located on the locking tube (5), said claw exhibiting a continuous opening of equal or larger diameter than the diameter of the piston rod or of the cylinder (2), from which a claw opening (19) facing towards the piston rod or cylinder (2) and having a smaller width than the diameter of the piston rod or cylinder (2) opens radially outwards at right angles to the continuation of the piston rod (3) and the claw arms (22) are of radially resilient form, and the claw (18) on its area diametrically opposite the claw opening (19) has an actuating area (23) that can be pressurized radially to the continuous opening to spread the claw arms (22) which claw arms have stiffened transitional areas (24) to the actuating area (23), or, **in that** the cylinder arrangement exhibits one or more latching springs that during swivelling of the locking tube between the locking position and the release position can be deflected against their spring force by a part of the locking tube and can engage behind this part in the locking position.

2. Piston-cylinder assembly according to Claim 1, **characterized in that** the locking tube (5) is designed as an injection moulding made of plastic and forms a single part together with the latching springs (17).

3. Piston-cylinder assembly according to either of the preceding claims, **characterized in that** the locking tube (5) is connected at its first end section (6) to the free end of the piston rod (3) by means of a latching device.

4. Piston-cylinder assembly according to Claim 3, **characterized in that** the locking tube (5) has a continuous axial opening (8) at its first end section (6), through which the free end of the piston rod (3) is guided with clearance and is connected to the locking tube (5).

5. Piston-cylinder assembly according to Claim 4, **characterized in that** the free end of the piston rod (3) protruding out of the locking tube (5) has a stop (11) that is supported axially on the mouth area (12) of the continuous opening (8) of the locking tube (5).

6. Piston-cylinder assembly according to one of Claims 3 to 5, **characterized in that** the latching device exhibits a latching arm (15) extending axially to the piston rod (3) and away from the second end section (7) of the locking tube (5), at the free end of which a latching hook (14) is provided by which a latching lug (13) at the free end of the piston rod (3) can be engaged behind in such a way that the stop (11) at the free end of the piston rod (3) is held in contact with the mouth area (12) of the locking tube (5).

## Revendications

1. Agrégat de cylindre-piston pouvant être bloqué, en particulier ressort à gaz ou amortisseur comprenant un agencement de cylindre, qui présente un cylindre fermé dans lequel est guidé de manière coulissante un piston divisant l'espace interne du cylindre rempli de gaz sous pression en une première et une deuxième chambre, lequel piston présente d'un côté une tige de piston qui est guidée vers l'extérieur de manière étanchée contre l'un des côtés frontaux du cylindre hors de l'espace interne du cylindre, la première et la deuxième chambre étant connectées l'une à l'autre ou pouvant être connectées l'une à l'autre, avec un tube de fixation entourant l'agencement de cylindre qui est monté de manière pivotante avec sa première région d'extrémité dans la région de l'extrémité libre de la tige de piston entre une position de libération coaxiale par rapport à la tige de piston et une position de blocage inclinée par rapport à l'étendue longitudinale de la tige de piston, et qui présente au niveau de sa deuxième région d'extrémité une butée de support, le tube de fixation, lorsque la tige de piston est sortie, pouvant pivoter dans la position de blocage et pouvant être appliqué avec la butée de support axialement contre l'un des côtés frontaux du cylindre, le tube de fixation pouvant être retenu dans sa position de blocage au moyen d'un dispositif de retenue actionnable et le tube de fixation se trouvant dans sa position de blocage pouvant être connecté au moyen d'un dispositif d'encliquetage à une partie de l'agencement de cylindre, **caractérisé en ce que** le tube de fixation (5) présente un ou plusieurs ressorts d'encliquetage (17) qui, lors d'un pivotement du tube de fixation (5) entre la position de blocage et la position de libération, peuvent être déviés par une partie de l'agencement de cylindre (1) à l'encontre de leur force de ressort et dans la position de blocage peuvent être encliquetés en venant en prise par l'arrière avec cette partie, la partie de l'agencement de cylindre (1) par laquelle le ressort d'encliquetage ou les ressorts d'encliquetage (17) peuvent être déviés à l'encontre de leur force de ressort et peuvent être encliquetés dans la position de blocage en venant en prise par l'arrière avec cette partie étant la tige de piston ou le cylindre (2), et les ressorts d'encliquetage (17) étant formés par une griffe (18) disposée sur le tube de fixation (5), laquelle griffe présente une ouverture de passage de diamètre identique ou supérieur au diamètre de la tige de piston ou du cylindre (2), de laquelle griffe débouche radialement vers l'extérieur une ouverture de griffe (19) orientée vers la tige de piston ou vers le cylindre (2), ayant une plus petite largeur que le diamètre de la tige de piston ou du cylindre (2) transversalement à l'étendue de la tige de piston (3), et les bras de la griffe (22) étant réalisés de manière radialement élastique et la griffe (18) possédant au niveau de sa région diamétralement opposée à l'ouverture de griffe (19) une région d'actionnement (23) qui peut être sollicitée par une force radialement par rapport à l'ouverture de passage en écartant les bras de la griffe (22), lesquels présentent des régions de transition renforcées (24) par rapport à la région d'actionnement (23), ou **en ce que** l'agencement de cylindre présente un ou plusieurs ressorts d'encliquetage qui, dans le cas d'un pivotement du tube de fixation entre la position de blocage et la position de libération, peuvent être déviés par une partie du tube de fixation à l'encontre de leur force de ressort et peuvent être encliquetés dans la position de blocage en venant en prise par l'arrière avec cette partie.

2. Agrégat de cylindre-piston selon la revendication 1, **caractérisé en ce que** le tube de fixation (5) est réalisé sous forme de pièce moulée par injection de plastique et est réalisé d'une seule pièce avec les ressorts d'encliquetage (17).

3. Agrégat de cylindre-piston selon l'une quelconque des revendications précédentes, **caractérisé en ce que** le tube de fixation (5) est connecté au niveau de sa première région d'extrémité (6) au moyen d'un dispositif d'encliquetage à l'extrémité libre de la tige de piston (3).

4. Agrégat de cylindre-piston selon la revendication 3, **caractérisé en ce que** le tube de fixation (5) possède au niveau de sa première région d'extrémité (6) une ouverture de passage axiale (8) à travers laquelle l'extrémité libre de la tige de piston (3) est guidée avec jeu et est connectée au tube de fixation (5).

5. Agrégat de cylindre-piston selon la revendication 4, **caractérisé en ce que** l'extrémité libre de la tige de piston (3) sortant du tube de fixation (5) possède une butée (11) qui est supportée axialement sur la région d'embouchure (12) de l'ouverture de passage (8) du tube de fixation (5) .

6. Agrégat de cylindre-piston selon l'une quelconque des revendications 3 à 5, **caractérisé en ce que** le dispositif d'encliquetage présente un bras d'encliquetage (15) orienté à l'écart de la deuxième région d'extrémité (7) du tube de fixation (5) axialement par rapport à la tige de piston (3), à l'extrémité libre duquel est disposé un crochet d'encliquetage (14) à travers lequel un insert d'encliquetage (13) peut être engagé par l'arrière à l'extrémité libre de la tige de piston (3), de telle sorte que la butée (11) à l'extrémité libre de la tige de piston (3) soit maintenue en appui contre la région d'embouchure (12) du tube de fixation (5).
